# EUROPEAN PATENT APPLICATION

(11) **EP 1 128 280 A2**
(43) Date of publication of application: **29.08.2001**
(21) Application number: 00311232.3
(22) Date of filing: 15.12.2000
(51) Int. Cl.: G06F 17/30

(54) **System and method for browsing structured document**

(30) Priority: 24.02.2000 JP 2000047156
(71) Applicant: MITSUBISHI DENKI KABUSHIKI KAISHA, Tokyo 100-8310 (JP)
(72) Inventor: Mizuguchi, Takehisa, Chiyoda-ku, Tokyo 100-8310 (JP); Kino, Shigenori, Chiyoda-ku, Tokyo 100-8310 (JP); Mochizuki, Yasuyuki, Chiyoda-ku, Tokyo 100-8310 (JP); Otani, Haruyuki, Chiyoda-ku, Tokyo 100-8310 (JP)
(74) Representative: Nicholls, Michael John

(57) **Abstract**

The present invention relates to a structured document browsing system having mutually connected server unit and browsing unit, and aims to provide the structured document browsing system which can reduce the communication amount and the memory amount. A WWW browser selects elements required for displaying the structured document from a style sheet, transmits a necessary element parameter showing the necessary elements to a WWW server with a request for the structured document. The WWW server extracts elements specified by the received necessary element parameter from the read structured document, generates an extracted XML document of necessary elements, and transmits the document to the WWW browser.

## Description

The present invention relates to, for example, a structured document browsing system including a server and a browser connected each other and in particular, to the structured document browsing system which is capable to reduce communication amount and memory amount.

The structured document is, for example, XML (eXtensible Markup Language). To obtain the XML document via network to display, World Wide Web (hereinafter, referred to as WWW) is used. In the following explanation, an example case will be shown in which WWW is utilized for obtaining and displaying the structured document.

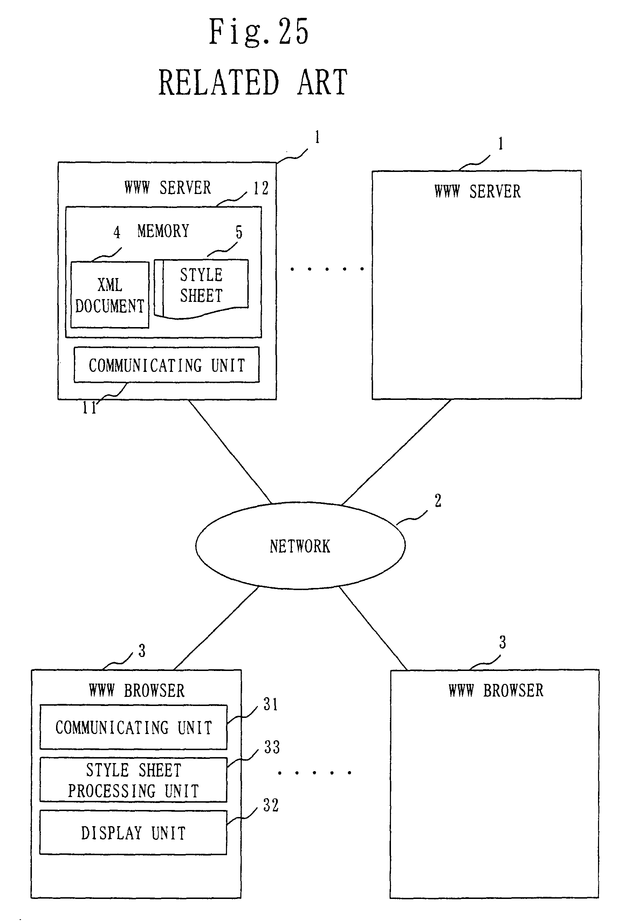

In the accompanying drawings Fig. 25 shows a configuration of a structured document browsing system according to a related art.

In the figure, a reference numeral 1 shows a WWW server, 2 is a network, and 3 is a WWW browser. The WWW server 2 is connected with the WWW browser 3 via the network 2.

The WWW server 1 provides an XML document 4 and a style sheet 5 which is format information for displaying the structured document on the WWW browser. The XML document 4 and the style sheet 5 are stored in a memory 12. And the system also includes a communicating unit 11 for communicating with the WWW browser.

The WWW browser 3 includes a communicating unit 31 for communicating with the WWW server, a style sheet processing unit 33 for forming the obtained XML document 4 into the display format by the style sheet 5, and a display unit 32 for displaying the document and so on.

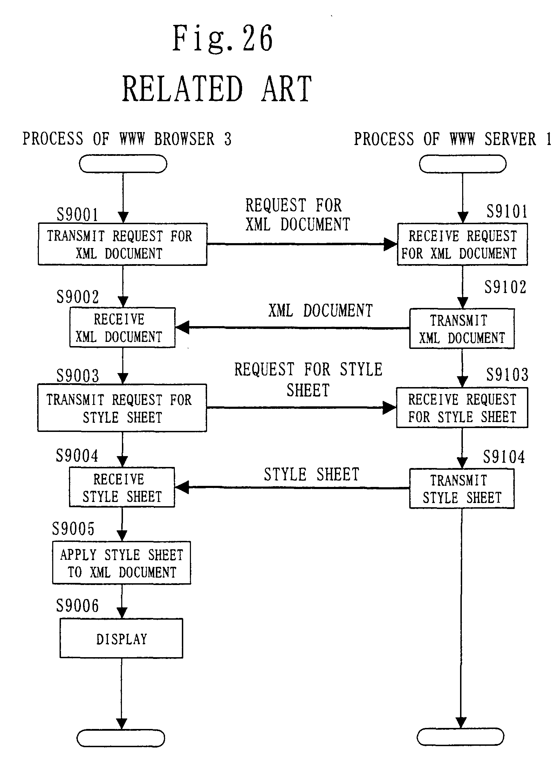

In the following, an operation of the structured document browsing system will be explained. Fig. 26 shows the operation of the structured document browsing system according to the related art.

First, the WWW browser 3 requests the XML document from the WWW server 1 (see steps S9001, S9101), and the WWW server 1 transmits the XML document stored in the memory 12 (steps S9102, S9002).

Next, the WWW browser 3 requests the style sheet from the WWW server 1 (steps S9003, S9103), and the WWW server transmits the style sheet stored in the memory 12 (steps S9104, S9004).

Then, the WWW browser 3 applies the style sheet to the received XML document by the style sheet processing unit 33 to convert the XML document into the display format (step S 9005).

Fig. 27 shows an example of the XML format data. This example includes data of an addressbook, of which each entry (person) includes a name (name), a telephone number (tel) and an address (address).

Fig. 28 shows an example of the style sheet. This example shows that only name (name) is extracted from the addressbook data of XML format shown in Fig. 27 and displayed as a list.

Fig. 29 shows an example of display format data in case of applying the style sheet of Fig 28 to the addressbook data of Fig. 27. Only name (name) is extracted from the addressbook data to display as a list. Here, the data is written in HTML format for convenience.

Finally, the data converted into the display format is displayed by the display unit (step S9006).

In the foregoing conventional technique, the data finally displayed is only name (name) among the XML format data received from the WWW server 1 by the WWW browser 3, and the telephone number (tel) and the address (address) are not essentially required. Namely, there is a problem that unnecessary information transmitted from the WWW server 1 to the WWW browser 3 increases the communication amount.

Further, there is also a problem that more memory capacity is needed because of receiving more information than required.

Yet further, it is required to install the software processing the XML document and the style sheet for each WWW browser for displaying the XML document and using style sheet, which makes the configuration complicated.

The present invention is provided to solve the above problems, and aims to reduce the communication amount and the memory amount by transmitting only necessary document for displaying on the WWW browser of the browser.

Further, the present invention aims to reduce the communication amount by selecting the necessary information with the proxy server to transmit to the WWW browser, without any modification of the WWW server or the WWW browser.

According to the present invention, a structured document browsing system having a server and a browser which are mutually connected,
wherein the server includes:
   a structured document memory for storing a structured document having a plurality of elements, and
wherein the browser includes:
   a necessary element selecting unit for selecting necessary elements for displaying the structured document from a style sheet which is information identifying a format for displaying the structured document;
   a necessary element parameter transmitting unit for transmitting a necessary element parameter specifying the necessary elements selected; and
   a structured document request transmitting unit for transmitting a request for the structured document, and
wherein the server further includes:
   a structured document request receiving unit for receiving the request for the structured document;
   a necessary element parameter receiving unit for receiving the necessary element parameter;
   an element extracting unit for reading the structured document requested from the structured document memory, for extracting elements specified by the necessary element parameter received from the structured document read, and for generating an extracted structured document of necessary elements consisting of the elements extracted; and
   an extracted structured document of necessary elements transmitting unit for transmitting the extracted structured document of necessary elements generated, and
wherein the browser further includes:
   an extracted structured document of necessary elements receiving unit for receiving the extracted structured document of necessary elements;
   a style sheet applying unit for applying the style sheet to the extracted structured document of necessary elements received, and for generating a display format data; and
   a display unit for displaying the display format data generated.

According to the present invention, a structured document browsing system having a server and a browser which are mutually connected,
wherein the server includes:
   a structured document memory for storing a structured document having a plurality of elements;
   a style sheet memory for storing a style sheet which is information indicating a format for displaying the structured document, and
wherein the browser includes:
   a structured document request transmitting unit for transmitting a request for the structured document; and
   a style sheet request transmitting unit for transmitting a request for the style sheet,
wherein the server further includes:
   a structured document request receiving unit for receiving the request for the structured document;
   a style sheet request receiving unit for receiving the request for the style sheet;
   a necessary element selecting unit for reading the style sheet requested from the style sheet memory, and selecting necessary elements for displaying the structured document;
   an element extracting unit for reading the structured document requested from the structured document memory, extracting the elements selected from the structured document read, and generating an extracted structured document of necessary elements consisting of the elements extracted;
   an extracted structured document of necessary elements transmitting unit for transmitting the extracted structured document of necessary elements generated; and
   a style sheet transmitting unit for transmitting the style sheet, and
wherein the browser further includes:
   an extracted structured document of necessary elements receiving unit for receiving the extracted structured document of necessary elements;
   a style sheet receiving unit for receiving the style sheet;
   a style sheet applying unit for applying the style sheet received to the extracted structured document of necessary elements received, and for generating a display format data; and
   a display unit for displaying the display format data generated.

According to the present invention, a structured document browsing system having a server, a proxy server and a browser,
wherein the server includes:
   a structured document memory at a server side for storing a structured document having a plurality of elements; and
   a style sheet memory at the server side for storing a style sheet which is information identifying a format for displaying the structured document, and
wherein the browser includes:
   a structured document request transmitting unit at a browser side for transmitting a request for the structured document to the proxy server; and
   a style sheet request transmitting unit at the browser side for transmitting a request for the style sheet to the proxy server, and
wherein the proxy server includes:
   a structured document request receiving unit at a proxy server side for receiving the request for the structured document from the browser;
   a structured document request transmitting unit at the proxy server side for transmitting the request for the structured document to the server when the request for the structured document is received;
   a style sheet request receiving unit at the proxy server side for receiving the request for the style sheet from the browser; and
   a style sheet request transmitting unit at the proxy server side for transmitting the request for the style sheet to the server when the request for the style sheet is received, and
wherein the server further includes:
   a structured document request receiving unit at the server side for receiving the request for the structured document from the proxy server;
   a structured document transmitting unit at the server side for reading the structured document requested from the structured document memory, and for transmitting the structured document read to the proxy server when the request for the structured document is received;
   a style sheet request receiving unit at the server side for receiving the request for the style sheet from the proxy server; and
   a style sheet transmitting unit at the server side for reading the style sheet requested from the style sheet memory at the server side, and for transmitting the style sheet read to the proxy server when the request for the style sheet is received, and
wherein the proxy server further includes:
   a structured document receiving unit at the proxy server side for receiving the structured document from the server;
   a structured document memory at the proxy server side for storing the structured document received;
   a style sheet receiving unit at the proxy server side for receiving the style sheet from the server;
   a style sheet memory at the proxy server for storing the style sheet received;
   a style sheet applying unit for applying the style sheet stored in the style sheet memory at the proxy server side to the structured document stored in the structured document memory at the proxy server side, and for generating a display format data; and
   a display format data transmitting unit for transmitting the display format data generated to the browser, and
wherein the browser further includes:
   a display format data receiving unit for receiving the display format data from the proxy server; and
   a display unit for displaying the display format data received.

According to the present invention, a method for browsing a structured document of a structured document browsing system having a server which stores a structured document including a plurality of elements and a browser connected with the server, the method including:
selecting necessary elements for displaying the structured document from a style sheet which is information identifying a format for displaying the structured document by the browser;
transmitting a necessary element parameter showing the necessary elements selected, by the browser;
transmitting a request for the structured document by the browser;
receiving the request for the structured document by the server;
receiving the necessary element parameter by the server;
reading the structured document requested, extracting elements specified by the necessary element parameter received, and generating an extracted structured document of necessary elements consisting of the elements extracted, by the server;
transmitting the extracted structured document of necessary elements generated, by the server;
receiving the extracted structured document of necessary elements by the browser;
applying the style sheet to the extracted structured document of necessary elements received, and generating a display format data by the browser; and
displaying the display format data generated by the browser.

According to the present invention, a server connected with a browser, the server including:
a structured document memory for storing a structured document having a plurality of elements;
a structured document request receiving unit for receiving a request for the structured document from the browser;
a necessary element parameter receiving unit for receiving a necessary element parameter showing necessary elements for displaying the structured document from the browser;
an element extracting unit for reading the structured document requested from the structured document memory, for extracting elements specified by the necessary element parameter received from the structured document read, and for generating an extracted structured document of necessary elements consisting of the elements extracted; and
an extracted structured document of necessary elements transmitting unit for transmitting the extracted structured document of necessary elements generated to the browser.

According to the present invention, a browser connected with a server which stores a structured document having a plurality of elements, the browser including:
a necessary element selecting unit for selecting necessary elements for displaying the structured document from a style sheet which is information identifying a format for displaying the structured document;
a necessary element parameter transmitting unit for transmitting a necessary element parameter showing the necessary elements selected;
a structured document request transmitting unit for transmitting a request for the structured document to the server;
an extracted structured document of necessary elements receiving unit for receiving an extracted structured document of necessary elements consisting of elements specified by the necessary element parameter from the server;
a style sheet applying unit for applying the style sheet to the extracted structured document of necessary elements received and for generating a display format data; and
a display unit for displaying the display format data generated.

According to the present invention, a computer readable storage medium having a computer readable program stored therein for causing a computer which is a server for storing a structured document having a plurality of elements and connected with a browser to perform an operation process,
wherein the operation process includes:
receiving a request for the structured document from the browser;
receiving a necessary element parameter showing necessary elements for displaying the structured document from the browser;
reading the structured document requested, extracting elements specified by the necessary element parameter received, and generating an extracted structured document of necessary elements consisting of the elements extracted; and
transmitting the extracted structured document of necessary elements generated to the browser.

According to the present invention, a computer readable storage medium having a computer readable program stored therein for causing a computer which is a browser connected with a server for storing a structured document having a plurality of elements to perform an operation process,
wherein the operation process includes:
selecting necessary elements for displaying the structured document from a style sheet which is information identifying a format for displaying the structured document;
transmitting a necessary element parameter showing the necessary elements selected;
transmitting a request for the structured document to the server;
receiving an extracted structured document of necessary elements consisting of elements specified by the necessary element parameter from the server;
applying the style sheet to the extracted structured document of necessary elements received, and generating a display format data; and
displaying the display format data generated.

According to the present invention, a method for browsing a structured document of a structured document browsing system having a server which stores a structured document including a plurality of elements and a style sheet being information identifying a format for displaying the structured document, and a browser connected with the server, the method including:
transmitting a request for the structured document by the browser;
transmitting a request for the style sheet by the browser;
receiving the request for the structured document by the server;
receiving the request for the style sheet by the server;
reading the style sheet requested, and selecting necessary elements for displaying the structured document from the style sheet read, by the server;
reading the structured document requested, extracting the necessary elements selected from the structured document read, and generating an extracted structured document of necessary elements consisting of the elements extracted by the server;
transmitting the extracted structured document of necessary elements generated, by the server;
transmitting the style sheet by the server;
receiving the extracted structured document of necessary elements by the browser;
receiving the style sheet by the browser;
applying the style sheet received to the extracted structured document of necessary elements received, and generating a display format data, by the browser; and
displaying the display format data generated, by the browser.

According to the present invention, a server connected with a browser including:
a structured document memory for storing a structured document having a plurality of elements;
a style sheet memory for storing a style sheet which is information identifying a format for displaying the structured document;
a structured document request receiving unit for receiving a request for the structured document from the browser;
a style sheet request receiving unit for receiving a request for the style sheet from the browser;
a necessary element selecting unit for reading the style sheet requested from the style sheet memory, and selecting necessary elements for displaying the structured document from the style sheet read;
an element extracting unit for reading the structured document requested from the structured document memory, extracting the necessary elements selected from the structured document read, and generating an extracted structured document of necessary elements consisting of the elements extracted;
an extracted structured document of necessary elements transmitting unit for transmitting the extracted structured document of necessary elements generated to the browser; and
a style sheet transmitting unit for transmitting the style sheet to the browser.

According to the present invention, a browser connected with a server which stores a structured document having a plurality of elements and a style sheet being information identifying a format for displaying the structured document, the browser including:
a structured document request transmitting unit for transmitting a request for the structured document to the server;
a style sheet request transmitting unit for transmitting a request for the style sheet to the server;
an extracted structured document of necessary elements receiving unit for receiving an extracted structured document of necessary elements consisting of necessary elements for displaying the structured document from the server;
a style sheet receiving unit for receiving the style sheet from the server;
a style sheet applying unit for applying the style sheet received to the extracted structured document of necessary elements received, and for generating a display format data; and
a display unit for displaying the display format data.

According to the present invention, a computer readable storage medium having a computer readable program stored therein for causing a computer which is a server for storing a structured document having a plurality of elements and a style sheet for identifying a format for displaying the structured document and connected with a browser to perform an operation process,
wherein the operation process includes:
receiving a request for the structured document from the browser;
receiving a request for the style sheet from the browser;
reading the style sheet requested, and selecting necessary elements for displaying the structured document from the style sheet read;
reading the structured document requested, extracting the necessary elements selected from the structured document read, and generating an extracted structured document of necessary elements consisting of the elements extracted;
transmitting the extracted structured document of necessary elements generated to the browser; and
transmitting the style sheet to the browser.

According to the present invention, a computer readable storage medium having a computer readable program stored therein for causing a computer which is a browser connected with a server for storing a structured document having a plurality of elements and a style sheet being information for identifying a format for displaying the structured document to perform an operation process,
wherein the operation process includes:
transmitting a request for the structured document to the server;
transmitting a request for the style sheet to the server;
receiving an extracted structured document of necessary elements consisting of necessary elements for displaying the structured document from the server;
receiving the style sheet from the server;
applying the style sheet received to the extracted structured document of necessary elements received, and generating a display format data; and
displaying the display format data.

According to the present invention, a method for browsing a structured document of a structured document browsing system having a server for storing the structured document including a plurality of elements and a style sheet being information identifying a format for displaying the structured document, a proxy server connected with the server, and a browser connected with the proxy server, the method including:
transmitting a request for the structured document to the proxy server by the browser;
transmitting a request for the style sheet to the proxy server by the browser;
receiving the request for the structured document from the browser by the proxy server;
transmitting the request for the structured document to the server by the proxy server when the request for the structured document is received;
receiving the request for the style sheet from the browser by the proxy server;
transmitting the request for the style sheet to the server by the proxy server when the request for the style sheet is received;
receiving the request for the structured document from the proxy server by the server;
reading the structured document requested, and transmitting the structured document read to the proxy server by the server when the request for the structured document is received;
receiving the request for the style sheet from the proxy server by the server;
reading the style sheet requested, and transmitting the style sheet read to the proxy server by the server when the request for the style sheet is received;
receiving the structured document from the server by the proxy server;
storing the structured document received, by the proxy server; receiving the style sheet from the server by the proxy server;
storing the style sheet received, by the proxy server;
applying the style sheet stored to the structured document stored, and generating a display format data by the proxy server;
transmitting the display format data to the browser by the proxy server;
receiving the display format data from the proxy server by the browser; and
displaying the display format data received, by the browser.

According to the present invention, a proxy server connected with a server which stores a structured document having a plurality of elements and a style sheet being information for identifying a format for displaying the structured document, and a browser, the proxy server including:
a structured document request receiving unit at a proxy server side for receiving a request for the structured document from the browser;
a structured document request transmitting unit at the proxy server side for transmitting the request for the structured document to the server when the request for the structured document is received;
a style sheet request receiving unit at the proxy server side for receiving a request for the style sheet from the browser;
a style sheet request transmitting unit at the proxy server side for transmitting the request for the style sheet to the server when the request for the style sheet is received;
a structured document receiving unit at the proxy server side for receiving the structured document from the server;
a structured document memory at the proxy server side for storing the structured document received;
a style sheet receiving unit at the proxy server side for receiving the style sheet from the server;
a style sheet memory at the proxy server side for storing the style sheet received;
a style sheet applying unit for applying the style sheet stored in the style sheet memory at the proxy server side to the structured document stored in the structured document memory at the proxy server side, and for generating a display format data; and
a display format data transmitting unit for transmitting the display format data generated to the browser.

According to the present invention, a computer readable storage medium having a computer readable program stored therein for causing a computer which is a proxy server connected with a server storing a structured document having a plurality of elements and a style sheet being information identifying a format for displaying the structured document, and a browser to perform an operation process,
wherein the operation process includes:
receiving a request for the structured document from the browser;
transmitting the request for the structured document to the server when the request for the structured document is received;
receiving a request for the style sheet from the browser;
transmitting the request for the style sheet to the server when the request for the style sheet is received;
receiving the structured document from the server;
storing the structured document received;
receiving the style sheet from the server;
storing the style sheet received;
applying the style sheet stored to the structured document stored, and generating a display format data; and
transmitting the display format data to the browser.

The invention will be further described by way of example with reference to the accompanying drawings, wherein:

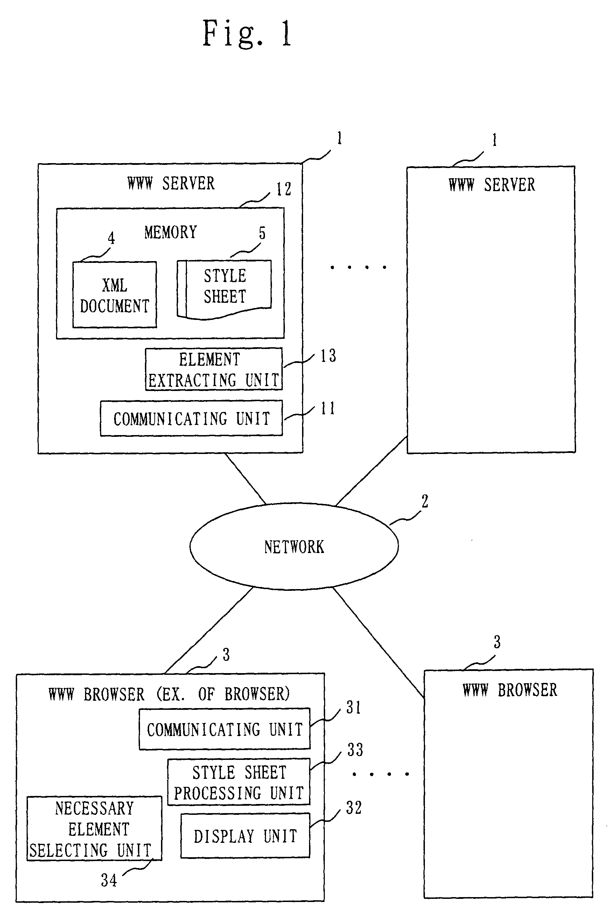

Fig. 1 shows a configuration of a structured document browsing system according to the first embodiment;

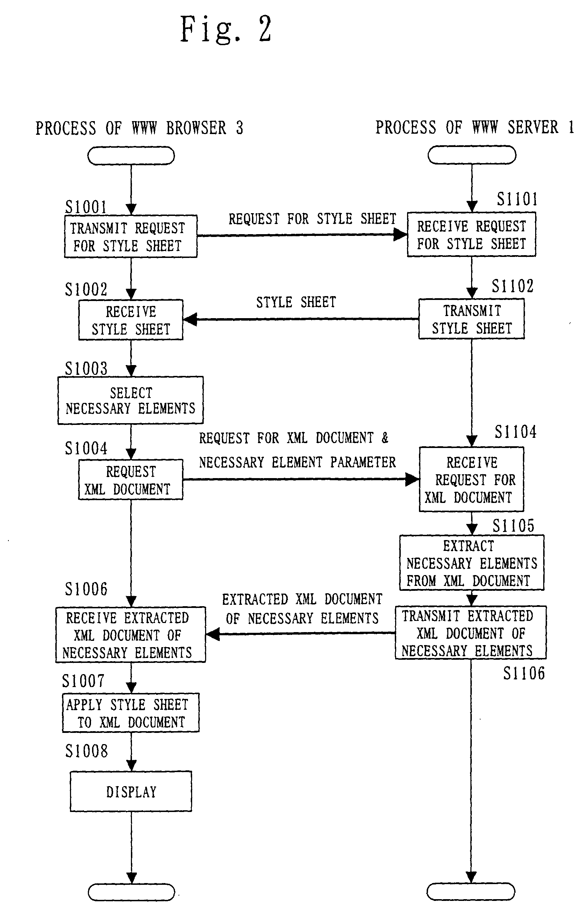

Fig. 2 shows an operation of the structured document browsing system of the first embodiment;

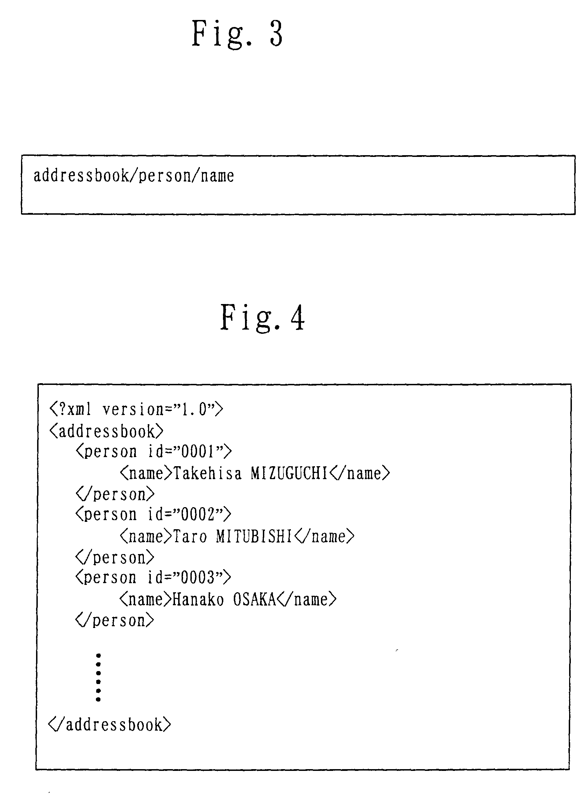

Fig. 3 shows an example of a necessary element parameter;
Fig. 4 shows an example of an extracted structured document of necessary elements;

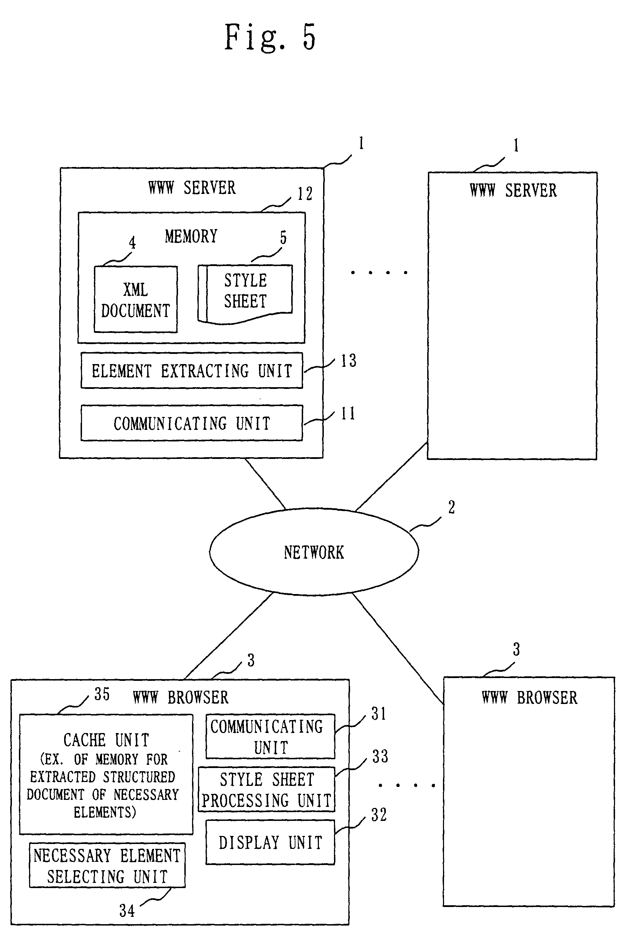

Fig. 5 shows a configuration of a structured document browsing system according to the second embodiment;

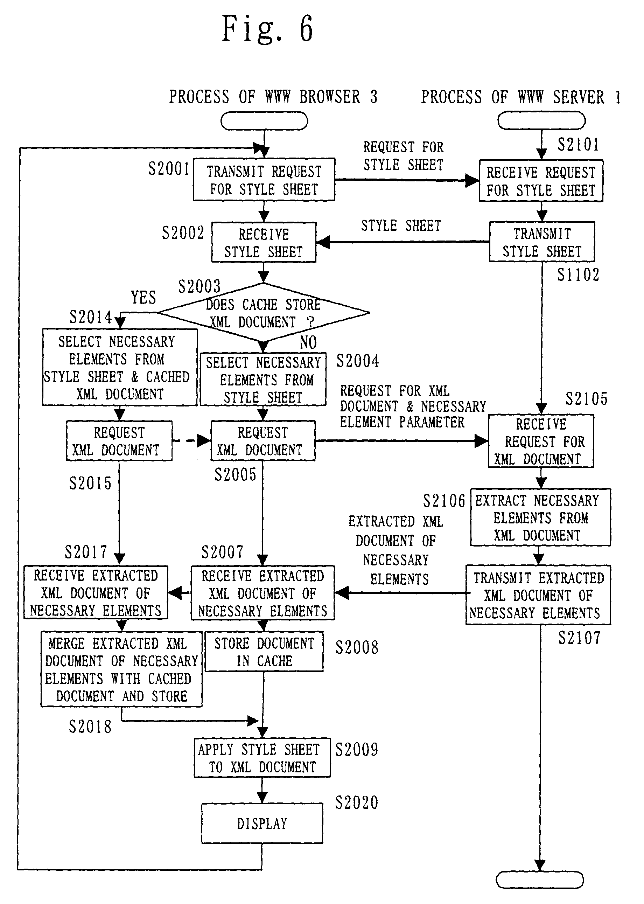

Fig. 6 shows an operation of the structured document browsing system of the second embodiment;

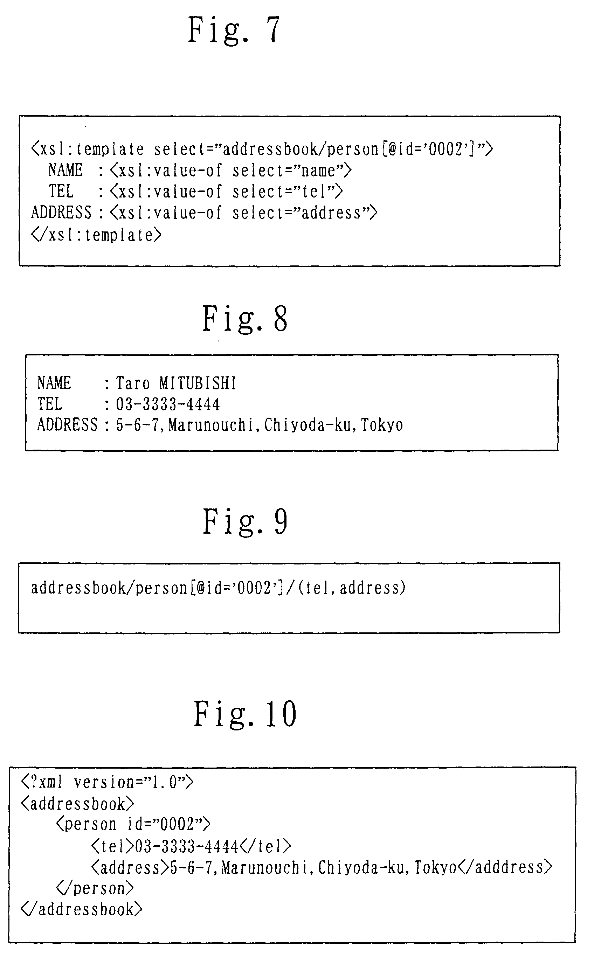

Fig. 7 shows an example of a style sheet;
Fig. 8 shows an example of display format;
Fig. 9 shows an example of the necessary element parameter in case the cached XML document is stored;
Fig. 10 shows an example of the extracted structured document of necessary elements in case the cached XML document is stored;

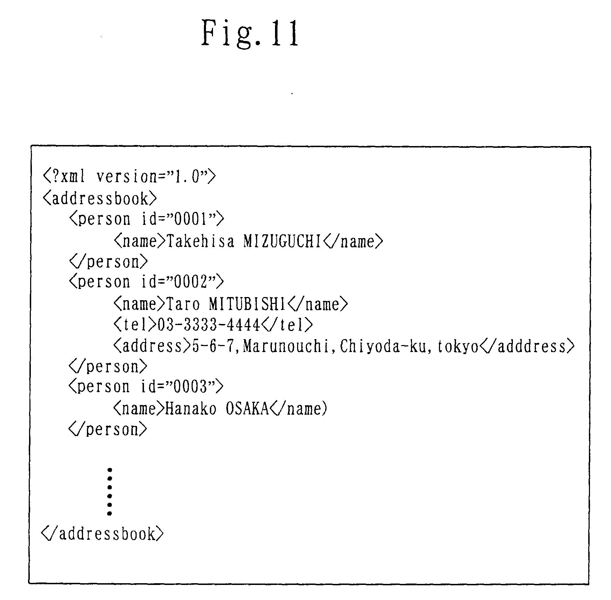

Fig. 11 shows an example of merged XML document;

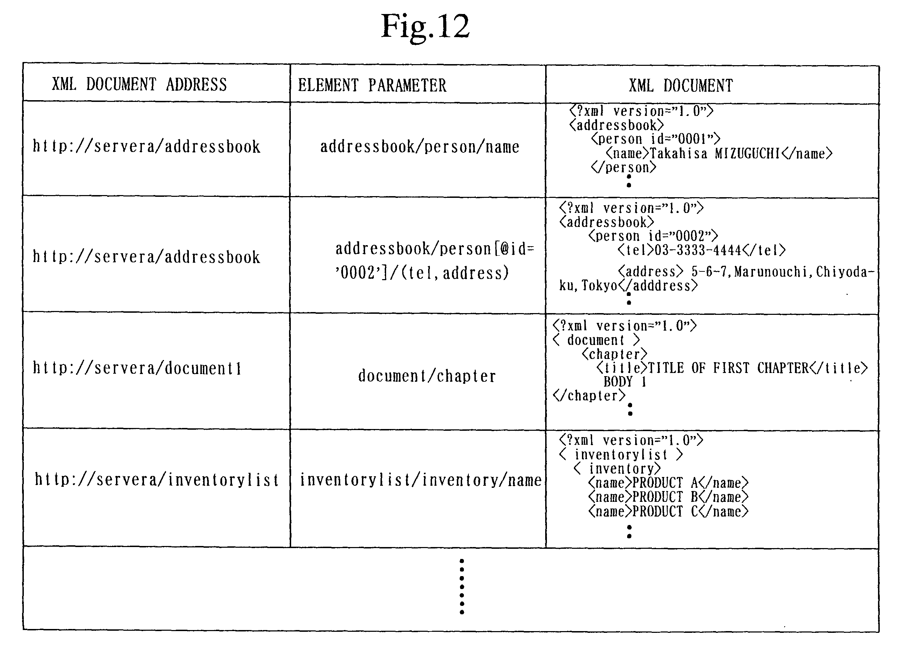

Fig. 12 shows an example of data configuration in case that the XML document including the element parameter is divided and cached;

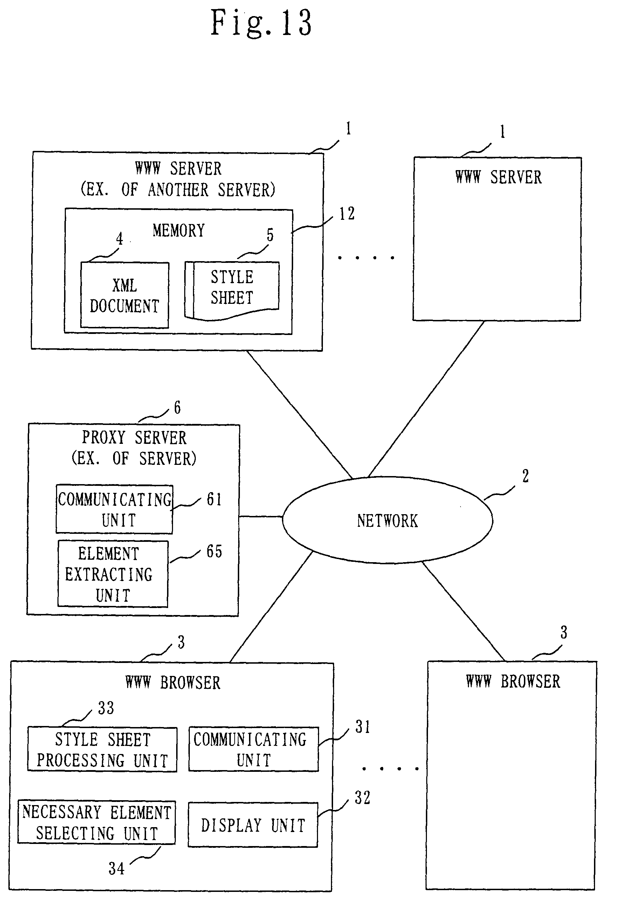

Fig. 13 shows a configuration of a structured document browsing system according to the third embodiment;

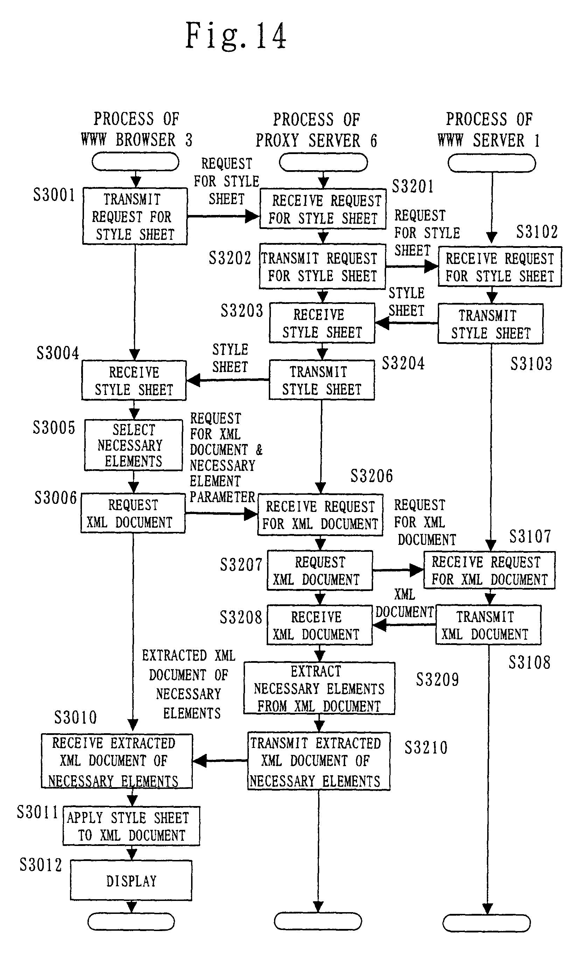

Fig. 14 shows an operation of the structured document browsing system according to the third embodiment;

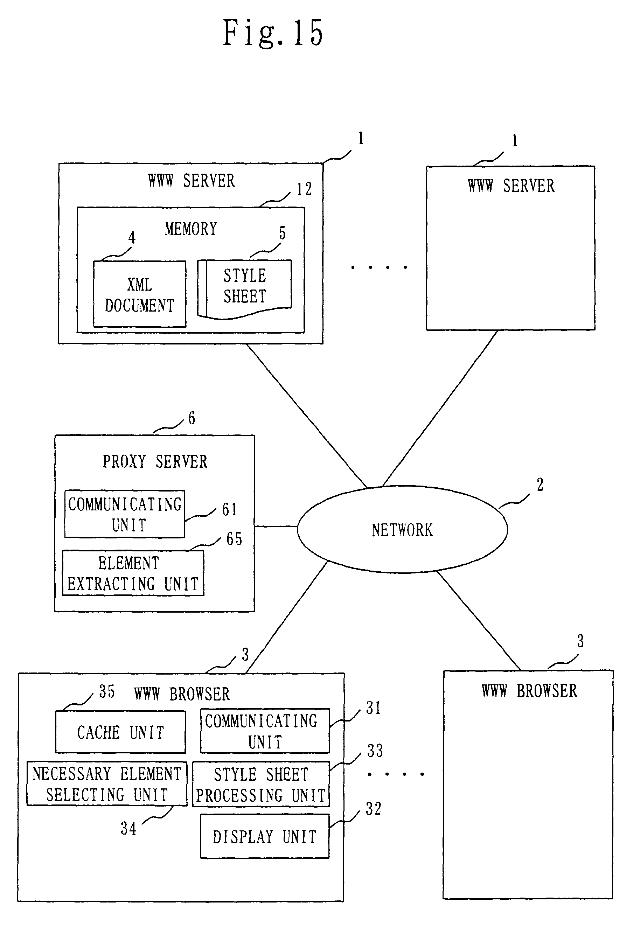

Fig. 15 shows a configuration of a structured document browsing system according to the fourth embodiment;

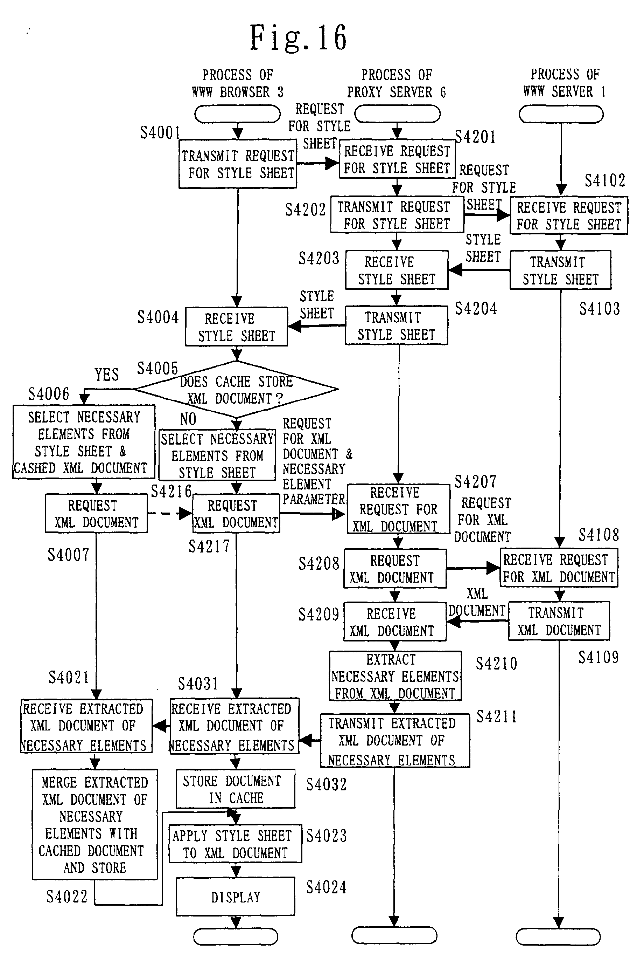

Fig. 16 shows an operation of the structured document browsing system according to the fourth embodiment;

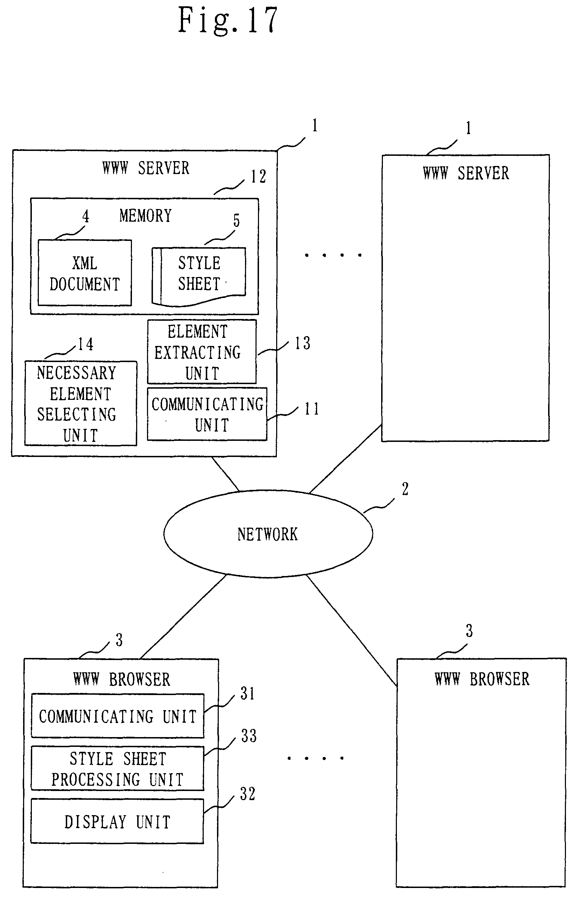

Fig. 17 shows a configuration of a structured document browsing system according to the fifth embodiment;

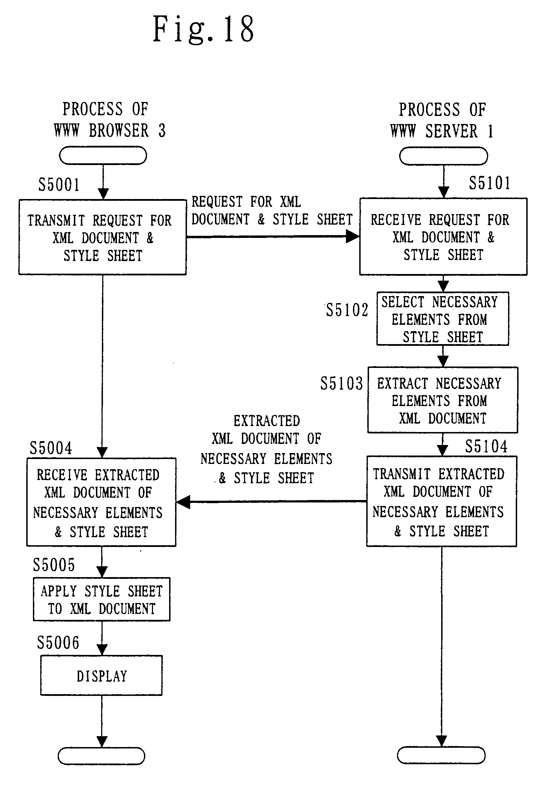

Fig. 18 shows an operation of the structured document browsing system according to the fifth embodiment;

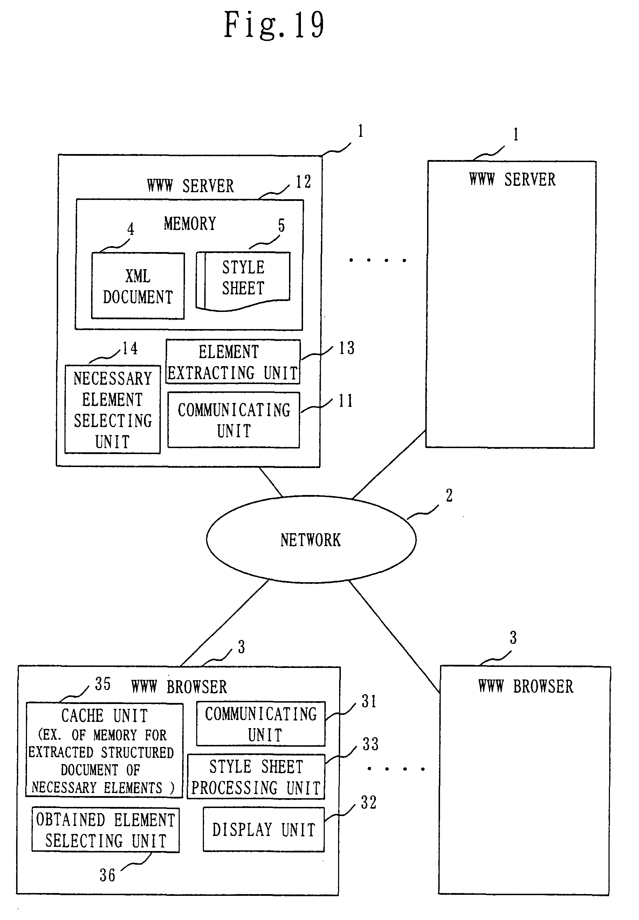

Fig. 19 shows a configuration of a structured document browsing system according to the sixth embodiment;

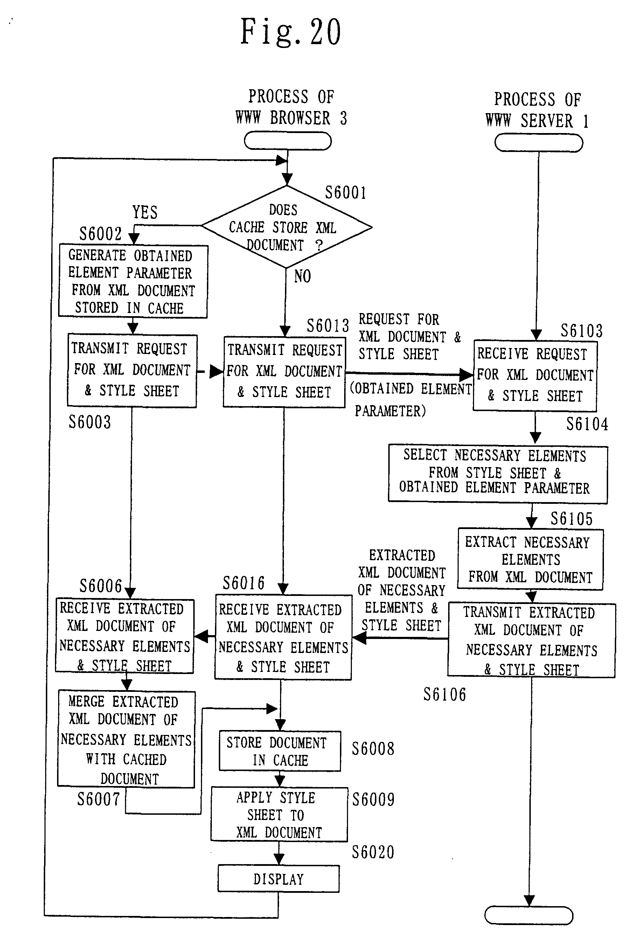

Fig. 20 shows an operation of the structured document browsing system according to the sixth embodiment;

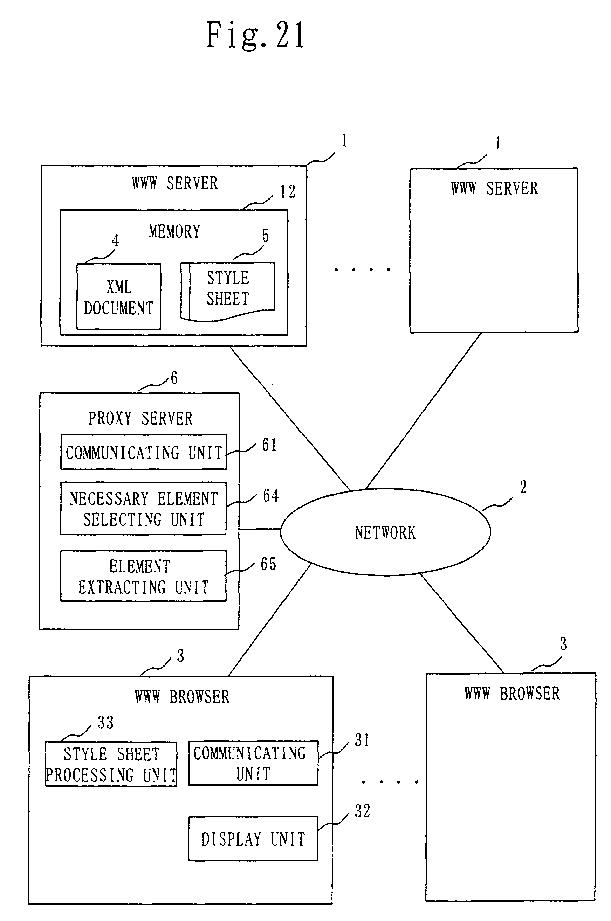

Fig. 21 shows a configuration of a structured document browsing system according to the seventh embodiment;

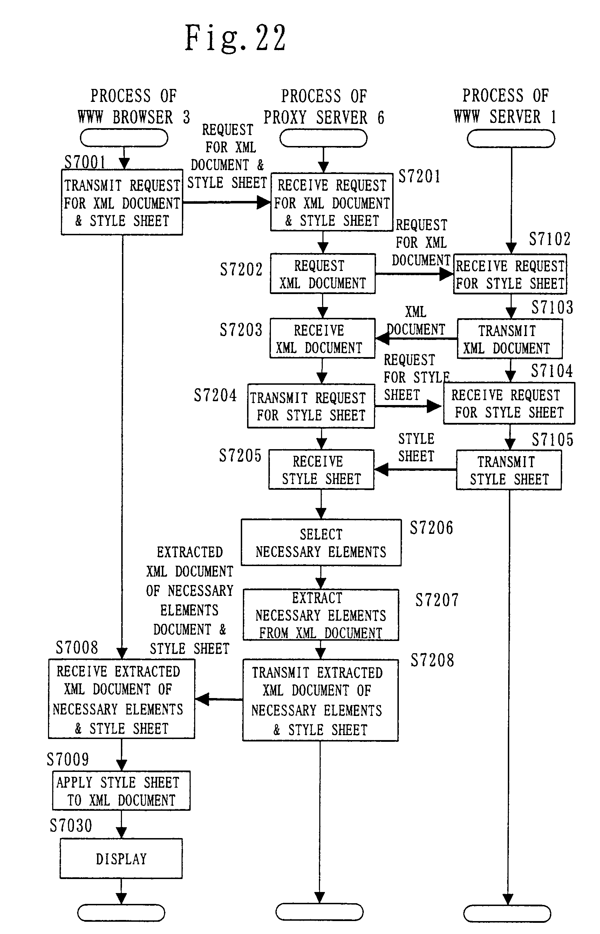

Fig. 22 shows an operation of the structured document browsing system according to the seventh embodiment;

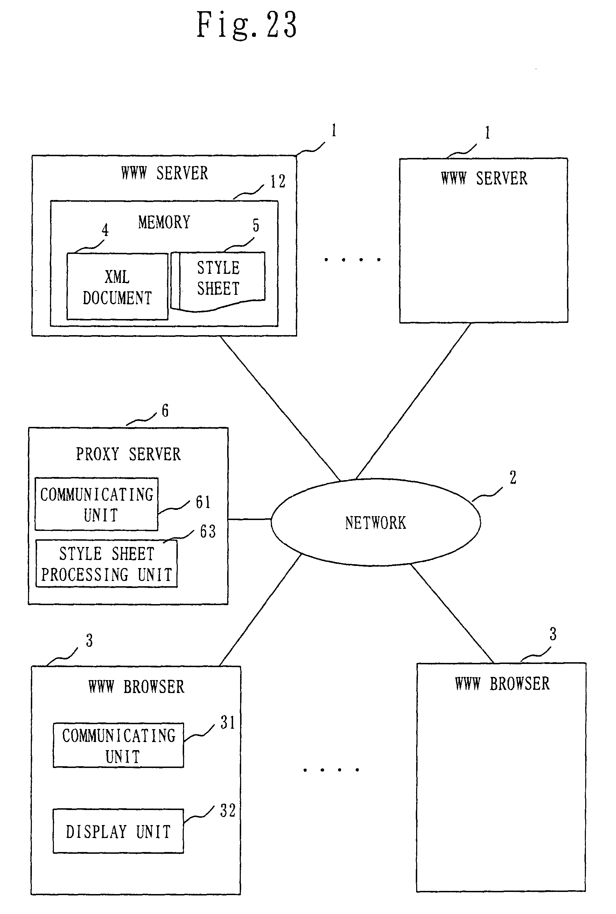

Fig. 23 shows a configuration of a structured document browsing system according to the eighth embodiment;

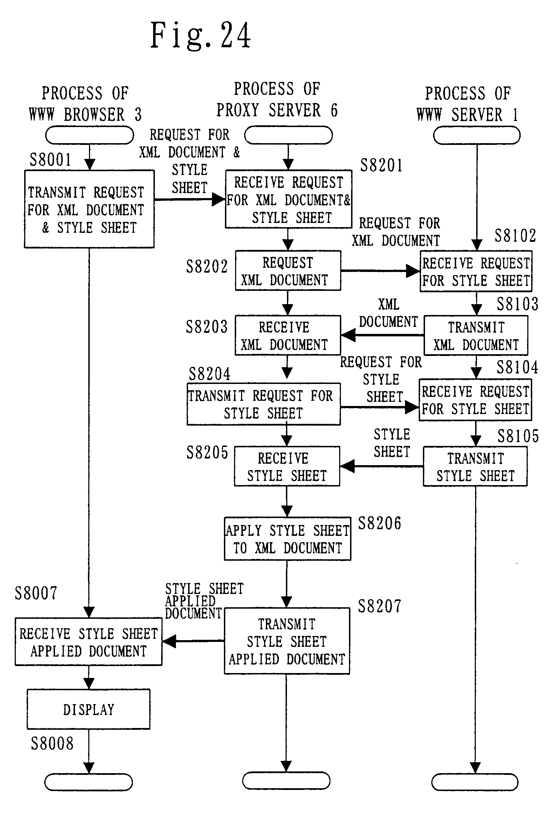

Fig. 24 shows an operation of the structured document browsing system according to the eighth embodiment;
Fig. 25 shows a configuration of a structured document browsing system according to a related art;
Fig. 26 shows an operation of the structured document browsing system according to the related art;

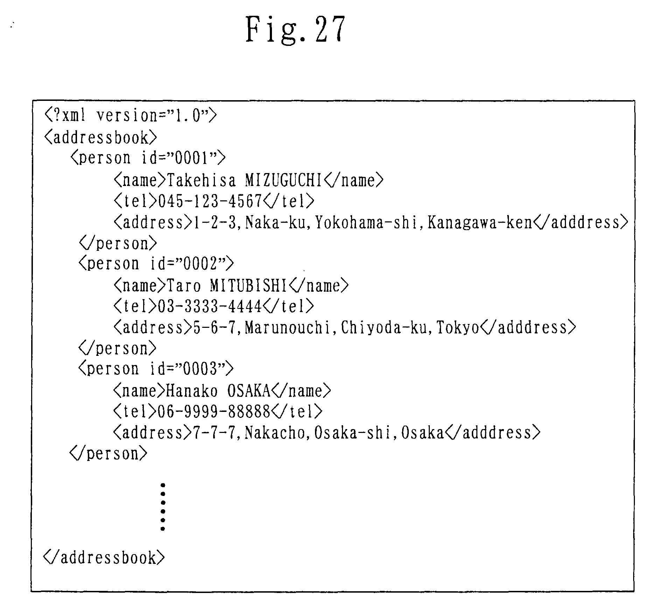

Fig. 27 shows an example of an XML format data;

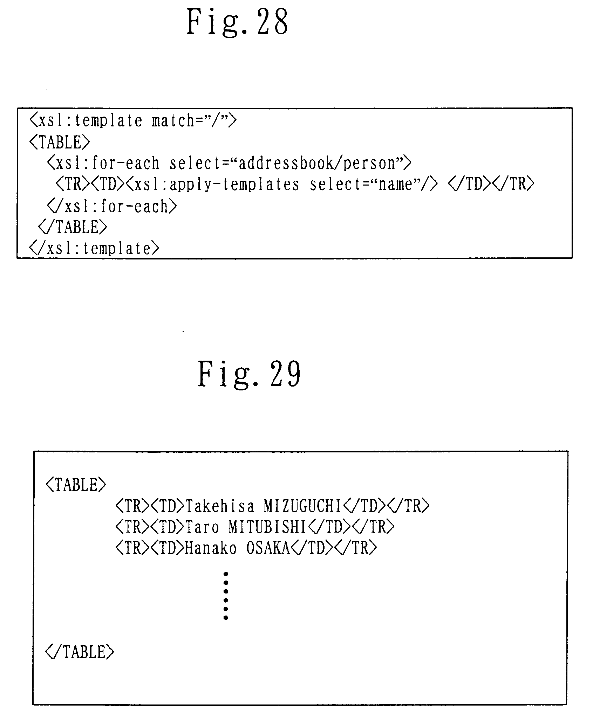

Fig. 28 shows an example of a style sheet; and
Fig. 29 shows an example of a display format data.

### Embodiment 1.

In the following, the present invention will be explained with reference to the drawings according to the embodiment.

Fig. 1 shows a configuration of a structured document browsing system according to the first embodiment. A WWW server 1 and a WWW browser 3 are connected via a network 2.

The WWW server 1 includes a communicating unit 11 for communicating with the WWW browser 3, a memory 12 for storing an XML document 4 and a style sheet 5 etc., and an element extracting unit 13 for extracting information elements from the XML document.

The WWW browser 3 includes a communicating unit 31 for communicating with the WWW server 1, a style sheet processing unit 33 for applying the style sheet to the XML document, a display unit 32 for displaying the document, a necessary element selecting unit 34 for selecting necessary elements from the style sheet, and so on.

In the following, an operation of the structured document browsing system will be explained. Fig. 2 shows the operation of the structured document browsing system according to the first embodiment.

First, the WWW browser 3 requests the style sheet 5 from the WWW server 1 (see steps S1001, S1101), and the WWW server 1 transmits the style sheet 5 stored in the memory 12 to the WWW browser 3 (steps S1002, S1102).

Next, the WWW browser 3 analyzes the received style sheet and selects necessary elements from the received style sheet by the necessary element selecting unit 34 (step S1003). For example, in case of the style sheet shown in Fig. 28, they are "name" elements of the all "person" elements within the "addressbook" element to display the document. This is, for example, can be represented as a parameter (necessary element parameter) as shown in Fig. 3. Fig. 3 shows an example of the necessary element parameter.

Then, the WWW browser 3 transmits the request for the XML document with the selected necessary element parameter to the WWW server 1 (steps S1004, S1104).

The WWW server 1 extracts elements specified by the necessary element parameter from the XML document 4 stored in the memory 12 (step S1105). Fig. 4 shows an example of an extracted structured document of necessary elements. In this example, the extracted structured document of necessary elements is an XML document extracted from the XML document shown in Fig. 27 based on the necessary element parameter shown in Fig. 3.

Then, the extracted XML document of necessary elements which is the extracted structured document of necessary elements is transmitted to the WWW browser 3 (steps S1006, S1106).

Finally, the WWW browser 3 applies the style sheet to the extracted XML document of necessary elements by the style sheet processing unit 33, converts the XML document into the display format data (step S1007), and displays the display format data (step S1008).

According to the present embodiment, the WWW browser previously analyzes the style sheet to select the necessary elements for display, and the WWW browser requests the XML document with the necessary element parameter from the WWW server. The WWW server extracts the necessary elements from the XML document to transmit to the WWW browser. Consequently, the communication amount between the WWW server and the WWW browser can be reduced.

Further, the memory amount required to receive the XML document at the WWW browser side can be also reduced.

Here, the example case has been explained in which the style sheet is received from the WWW server storing the XML document. The style sheet, however, can be received from another WWW server. Or, in another way, the style sheet can be previously stored in the WWW browser.

### Embodiment 2.

In the second embodiment, another example will be explained in which the WWW browser caches the document.

Fig. 5 shows a configuration of a structured document browsing system according to the second embodiment.

The WWW browser 3 includes a cache unit 35 for caching the XML document obtained from the server besides the configuration of the first embodiment.

Fig. 6 shows an operation of the structured document browsing system of the second embodiment.
First, the WWW browser 3 requests the style sheet 5 from the WWW server 1 (steps S2001, S2101), and the WWW server 1 transmits the style sheet 5 stored in the memory 12 to the WWW browser 3 (steps S2002, S2102).

Next, the WWW browser 3 checks if the XML document to be displayed is stored in the cache unit 35 or not (step S2003).

When the XML document is not stored in the cache unit 35, the WWW browser 3 analyzes the received style sheet by the necessary element selecting unit 34 to select necessary elements for display (step S2004). As well as the first embodiment, for example, in case of the style sheet shown in Fig. 28, the necessary elements for display are the "name" elements of the all "person" elements within the "addressbook" element. This can be represented as a parameter (necessary element parameter) shown in Fig. 3.

Then, the request for the XML document together with the selected necessary element parameter is transmitted to the WWW server 1 (step S2005, S2105).

The WWW server 1 extracts only elements specified by the necessary element parameter from the XML document stored in the memory 12 by the element extracting unit 13 (step S2106), and the WWW server transmits the extracted elements to the WWW browser (steps S2007, S2107). The WWW browser 3 stores the received extracted XML document of necessary elements in the cache unit 35 (step S2008), applies the style sheet to the XML document (step S2009) and displays the display format data (step S2020).

On the other hand, when the XML document is stored in the cache unit 35, the WWW browser 3 selects new necessary elements for display from the received style sheet and the cached XML document by the necessary element selecting unit 34 (step S2014).

Fig. 7 shows an example of the style sheet. Fig. 8 shows an example of display format data. The display format data shown in Fig. 8 is the display format data in case of applying the style sheet of Fig. 7 to the XML document of Fig. 27. The style sheet shown in Fig. 7 requires the "name" element, the "tel" element and the "address" element of the "person" element having "0002" as id within the "addressbook" element. Here, it is assumed that the cache unit 35 stores the extracted XML document of necessary elements of Fig. 4, the information of the "name" element has been already obtained, therefore, it is not required to obtain the "name" element from the WWW server 1. Namely, elements required to be newly obtained from the WWW server 1 are the "tel" element and the "address" element of the "person" element having "0002" as id within the "addressbook" element. These elements can be represented as necessary element parameters. Fig. 9 shows an example of the necessary element parameter in case the XML document is stored in the cache unit.

As well as the above-explained process, the request for the XML document is transmitted to the WWW server 1 together with the selected necessary element parameter (steps S2015, S2105). The WWW server 1 extracts only elements specified by the necessary element parameter from the requested XML document stored in the memory 12 by the element extracting unit 13 (step S2106) and the WWW server 1 transmits the extracted elements to the WWW browser 3 (steps S2017, S2107).

Fig. 10 shows an example of the extracted XML document of necessary elements in case that the cached XML document is stored. In Fig. 10, the XML document is made by extracting the elements from the XML document shown in Fig. 27 based on the necessary element parameter shown in Fig. 9.

The WWW browser 3 merges the received extracted XML document of necessary elements with the XML document stored in the cache unit 35, and stores the merged document in the cache unit 35 (step S2018). Fig. 11 shows an example of the merged XML document. This example shows the merged XML document in case that the extracted XML document of necessary elements shown in Fig. 10 is merged with the XML document stored in the cache unit 35 (shown in Fig. 4).

Finally, the WWW browser 3 applies the style sheet to the merged XML document by the style sheet processing unit 33 (step S2009) and displays the display format data (step S2020).

In the above description, the XML document of selected elements is merged and stored in the cache unit 35, however, it is also possible to divide the XML document including the element parameter to store in the cache unit 35.

Fig. 12 shows an example of a data configuration in case that the XML document including the element parameter is divided and cached. Each XML document is stored with the address of the XML document and the element parameter included in the XML document. On storing the XML document in the cache unit 35, the WWW browser also stores the address of the XML document and the element parameter included in the XML document. By this configuration, when the necessary elements are selected from the style sheet and the cached XML document, the necessary elements can be judged by the element parameter without analyzing the stored XML document.

According to the present embodiment, the WWW browser previously analyzes the XML document and the style sheet stored in the cache unit, selects newly required elements for display. The WWW browser transmits the request for the XML document and the necessary element parameter to the WWW server, and the WWW server extracts the necessary elements from the XML document to transmit to the WWW browser. Therefore, the communication amount can be reduced.

Further, the memory capacity of the WWW browser required for receiving the XML document can be also reduced.

In the present embodiment, an example case where the style sheet is received from the WWW server storing the XML document has been described. The style sheet can be received from another WWW server, or the style sheet can be stored previously in the WWW browser.

### Embodiment 3.

In the present embodiment, the proxy server extracts the elements, while the WWW server extracts the elements in the first embodiment as has been explained.

Fig. 13 shows a configuration of a structured document browsing system according to the third embodiment. In the figure, the WWW server 1, the proxy server 6, and the WWW browser 3 are connected via the network 2.

The WWW server 1 includes a communicating unit 11 and a memory 12 and so on.

The WWW browser 3 includes a communicating unit 31, a style sheet processing unit 33, a display unit 32, and a necessary element selecting unit 34 for selecting necessary elements required for displaying from the style sheet and so on.

The proxy server 6 includes a communicating unit 61 for communicating with the WWW server 1 and the WWW browser 3, an element extracting unit 65 for extracting elements from the XML document, a temporary memory (not shown in the figure) (an example of a style sheet memory and a structured document memory) and so on.

An operation will be explained in the following. Fig. 14 shows the operation of the structured document browsing system according to the third embodiment.

The WWW browser 3 requests the style sheet from the proxy server 6 (steps S3001, S3201). The proxy server requests the style sheet from the WWW server 1 (steps S3202, S3102) and receives the style sheet (steps S3203, S3103). The received style sheet is temporarily stored in the temporary memory. The proxy server 6 transmits the received style sheet to the WWW browser 3 (steps S3204, S3004).

Alternatively, the WWW browser 3 requests the style sheet directly from the WWW server 1 and receives the style sheet without being intervened by the proxy server 6.

Next, the WWW browser 3 analyzes the received style sheet by the necessary element selecting unit 34 to select the necessary elements for display (step S3005). For example, in case of the style sheet shown in Fig. 28, the necessary elements for display are the "name" elements of the "person" elements within the "addressbook" element. This can be represented, for example, by the parameter (necessary element parameter) shown in Fig. 3.

The WWW browser 3 transmits the request for the XML document to the proxy server with the selected necessary element parameter (steps S3006, S3206).

The proxy server 6 requests the XML document from the WWW server (steps S3207, S3107), and the proxy server 6 receives the XML document (steps S3208, X3108). The received XML document is temporarily stored in the temporary memory.

Next, the proxy server 6 only extracts elements specified by the necessary element parameter using the element extracting unit 65 (step S3209). Fig. 4 shows an example of the XML document extracted from the XML document shown in Fig. 27 based on the necessary element parameter shown in Fig. 3.

Then, the extracted XML document of necessary elements and the style sheet are transmitted to the WWW browser (steps S3010, S3210).

Finally, the WWW browser 3 applies the style sheet to the XML document by the style sheet processing unit 33, converts the XML document into the display format data (step S3011), and displays the display format data (step S3012).

In this embodiment, the WWW browser previously analyzes the style sheet to select the necessary elements for display, then the WWW browser transmits the request for the XML document with the necessary element parameter to the proxy server. The proxy server extracts the necessary elements from the XML document received from the WWW server, and the proxy server transmit the extracted XML document of necessary elements to the WWW browser. Consequently, the amount of the communication between the proxy server and the WWW browser can be reduced.

Further, the amount of the memory of the WWW browser side required for receiving the XML document can be also reduced. At this time, the existing WWW server can be used for this embodiment, and there is no need to add a specific function to the WWW server.

In the foregoing description, the style sheet is received from the WWW server storing the XML document, however, the style sheet can be received from another WWW server, or the style sheet can be previously stored in the WWW browser.

### Embodiment 4.

In the second embodiment, the case that the WWW server extracts the elements was explained. In the fourth embodiment, another case will be explained, where the proxy server extracts the elements.

Fig. 15 shows a configuration of a structured document browsing system according to the fourth embodiment.

Similarly to the third embodiment, the WWW server 1, the proxy server 6, and the WWW browser 3 are connected via the network 2.

The WWW server 1 includes the communicating unit 11, the memory 12 and so on as well as the third embodiment.

The WWW browser 3 includes a cache unit 35 for caching the XML document obtained from the proxy server 6 in addition to the configuration of the third embodiment.

The proxy server 6 includes the communicating unit 61 for communicating with the WWW server 1 and the WWW browser 3, the element extracting unit 65 for extracting the elements from the XML document, the temporary memory (not shown in the figure) and so on.

An operation will be explained in the following. Fig. 16 shows an operation of the structured document browsing system according to the fourth embodiment.

First, the WWW browser 3 requests the style sheet from the proxy server 6 (steps S4001, S4201). The proxy server 6 requests the style sheet from the WWW server 1 (steps S4202, S4102) and receives the style sheet (steps S4203, S4103). The received style sheet is stored in the temporary memory. The proxy server 6 transmits the received style sheet to the WWW browser 3 (steps S4204, S4004).

Here, the WWW browser 3 can request the style sheet directly from the WWW server 1 and receive the style sheet without being intervened by the proxy server 6.

Next, the WWW browser 3 checks if the XML document to be displayed is stored in the cache unit 35 or not (step S4005).

When the cache unit 35 does not store the XML document, the WWW browser 3 analyzes the received style sheet by the necessary element selecting unit 34 and selects the necessary elements required for display (step S4016). For example, in case of the style sheet shown in Fig. 4, the elements required for display are the "name" elements of the "person" elements within the "addressbook" element, which can be represented by the parameter (necessary element parameter) shown in Fig. 9.

The WWW browser 3 transmits the request for the XML document with the selected necessary element parameter to the proxy server (steps S4017, S4207).

The proxy server 6 requests the XML document from the WWW server (steps S4208, S4108) and receives the XML document (steps S4209, S4109). The received XML document is stored in the temporary memory.

Next, the proxy server 6 extracts only the elements specified by the necessary element parameter from the received XML document using the element extracting unit 65 (step S4210). Fig. 4 shows an example of the XML document extracted from the XML document shown in Fig. 27 based on the necessary element parameter shown in Fig. 3.

Subsequently, the extracted XML document of necessary elements and the style sheet are transmitted to the WWW browser 3 (steps S4031, S4211). After storing the received extracted XML document of necessary elements in the cache unit 35 (step S4032), the WWW browser 3 applies the style sheet to the XML document (step S4023) and displays the display format data (step S 4024).

On the contrary, when the cache unit 35 stores the XML document, the WWW browser 3 newly selects the necessary elements from the received style sheet and the cached XML document using the necessary element selecting unit 34 for display (step S4006). Fig. 7 shows an example of the style sheet, and Fig. 8 is a display format data in case of applying the style sheet shown in Fig. 7 to the XML document shown in Fig. 27. For the style sheet shown in Fig. 7, it is required the "name" elements, the "tel" elements and the "address" elements of the "person" elements having '0002' as id within the "addressbook" element.

When the XML document is stored in the cache unit 35, the WWW browser 3 newly selects the necessary elements from the style sheet and the cached XML document by the necessary element selecting unit 34 for display (step S4006).

Supposing that the cache unit 35 stores the extracted XML document of necessary elements shown in Fig. 4, the "name" element has been already obtained in the extracted XML document. Therefore, there is no need to newly obtain the "name" element from the server, and only the "tel" element and "address" element should be represented by the necessary element parameters, which are required to obtain.

Consequently, the WWW browser 3 transmits the request for the XML document with the selected necessary element parameter to the proxy server 6 (steps S4007, S4207).

The proxy server 6 requests the XML document from the WWW server 1 (steps S4208, S4108) and receives the XML document (steps S4209, S4109). The received XML document is stored in the temporary memory.

Next, the proxy server 6 extracts only the elements specified by the necessary element parameter using the element extracting unit 65 (step S4210). Then, the extracted XML document of necessary elements is transmitted to the WWW browser 3 (steps S4021, S4211).

The WWW browser 3 merges the received extracted XML document of necessary elements with the XML document stored in the cache unit 35, and stores the merged XML document in the cache unit 35 (step S4022). The operation of the cache unit is the same as one in the second embodiment.

According to the present embodiment, the WWW browser previously analyzes the XML document stored in the cache unit and the style sheet to select the necessary elements for display, then the WWW browser transmits the request for the XML document with the necessary element parameter to the proxy server. The proxy server extracts the necessary elements from the XML document received from the WWW server to transmit the extracted XML document of necessary elements to the WWW browser. Consequently, the amount of the communication between the proxy server and the WWW browser can be reduced.

Further, the amount of the memory required for receiving the XML document at the WWW browser side can be also reduced. At this time, the existing WWW server can be used for this embodiment, and there is no need to add a specific function to the WWW server.

In the foregoing description, the style sheet is received from the WWW server storing the XML document, however, the style sheet can be received from another WWW server, or the style sheet can be previously stored in the WWW browser.

### Embodiment 5.

In the explanation of the above embodiment, the WWW browser selects the necessary elements. Another case will be explained as the fifth embodiment of the present invention, where the necessary elements are selected by the WWW server.

Fig. 17 shows a configuration of the structured document browsing system according to the fifth embodiment.

The WWW server 1 and the WWW browser 3 are connected via the network 2.

The WWW server 1 includes the communicating unit 11, the memory 12, the element extracting unit 13, the necessary element selecting unit 14 for selecting the necessary elements for display from the style sheet and so on.

The WWW browser 3 includes the communicating unit 31, the display unit 32, the processing unit 33 and so on.

Next, an operation will be explained. Fig. 18 shows an operation of the structured document browsing system of the fifth embodiment.

The WWW browser 3 requests the XML document and the style sheet from the WWW server 1 (step S5001).

On receiving the request (step S5101), the WWW server 1 analyzes the requested style sheet using the necessary element selecting unit 14 and selects the necessary elements for display (step S5102). For example, in case of the style sheet shown in Fig. 28, elements required for display are the "name" elements of the "person" elements within the "addressbook" element, which can be represented by, for example, the necessary element parameter shown in Fig. 3.

Next, the WWW server 1 extracts only the elements specified by the necessary element parameter from the required XML document (step S5103). Fig. 4 is an example of the XML document extracted by the necessary element parameter shown in Fig. 3 from the XML document shown in Fig. 27.

Subsequently, the WWW server 1 transmits the extracted XML document of necessary elements and the style sheet to the WWW browser 3 (steps S5004, S5104).

Finally, the WWW browser 3 applies the style sheet to the received extracted XML document of necessary elements using the style sheet processing unit 33, converts the document into the display format data (step S5005), and displays the display format data (step S5006).

According to the present embodiment, the WWW server previously analyzes the style sheet to select the necessary elements for display, the WWW server extracts the necessary elements from the XML document to transmit to the WWW browser. Consequently, the communication amount can be reduced.

Further, the amount of the memory required for receiving the XML document at the WWW browser side can be also reduced.

### Embodiment 6.

In the sixth embodiment, another case will be explained in which the WWW browser caches the document.

Fig. 19 shows a configuration of a structured document browsing system according to the sixth embodiment.

Besides the configuration of the fifth embodiment, the WWW browser 3 includes the cache unit 35 and an obtained element selecting unit 36 for selecting the elements which have been obtained from the XML document stored in the cache unit 35 as a parameter.

Next, an operation will be described. Fig. 20 shows an operation of the structured document browsing system according to the sixth embodiment.

The WWW browser 3 checks if the XML document to be displayed is stored in the cache unit 35 or not (step S6001).

When the document is not stored in the cache unit, the WWW browser 3 requests the XML document and the style sheet (step S6013).

On receiving the request (step S6103), the WWW server 1 analyzes the requested style sheet using the necessary element selecting unit 14, and selects the elements required for display (step S6104).

The WWW server 1 extracts the selected necessary elements from the requested XML document stored in the memory 12 (step S6105), and transmits the extracted XML document of necessary elements to the WWW browser (step S6106).

After receiving and storing the extracted XML document of necessary elements in the cache unit (step S6008), the WWW browser 3 applies the style sheet to the XML document (step S6009), and displays the display format data (step S6020).

On the other hand, when the XML document is stored in the cache unit 35, the WWW browser 3 selects the elements which has been already obtained from the stored XML document as a parameter using the obtained element selecting unit 36. For example, if the cache unit 35 stores the XML document shown in Fig. 4, the obtained elements are the "name" elements of the "person" elements within the "addressbook" element, therefore, an obtained element parameter will become as shown in Fig. 3.

Next, the WWW browser 3 transmits the request for the XML document and the request for the style sheet with the obtained element parameter (step S6003).

On receiving the request (step S6103), the WWW server 1 analyzes the requested style sheet and the obtained element parameter using the necessary element selecting unit, and selects elements newly required for display (step S6104). For example, in case of the style sheet shown in Fig. 7, the necessary elements are the "name" element, the "tel" element, and the "address" element of the "person" element having '0002' as id within the elements of "addressbook". However, the obtained element parameter shows that the "name" element has been already obtained, so that the "name" element is not required to be newly transmitted to the WWW browser 3 from the WWW server 1. Namely, the elements which are required to be newly transmitted to the WWW browser 3 from the WWW server 1 are the "tel" element and the "address" element of the "person" element having '0002' as id within the elements of "addressbook". The elements can be represented by, for example, the necessary element parameter shown in Fig. 9.

The WWW server 1 extracts only the elements specified by the necessary element parameter from the required XML document stored in the memory 12 using the element extracting unit 13 (step S6105), and transmits the extracted XML document of necessary elements to the WWW browser 3 (step S6106).

The WWW browser 3 merges the received extracted XML document of necessary elements with the XML document stored in the cache unit 35 (step S6007), and stores the merged document in the cache unit 35 (step S6008).

Finally, the WWW browser 3 applies the style sheet to the XML document using the style sheet processing unit 33 (step S6009), and displays the display format data (step S6020).

In the foregoing embodiment, the extracted XML document of necessary elements is merged and stored in the cache unit 35, however, it is also possible to cache as explained in the second embodiment and shown in Fig. 12.

According to the sixth embodiment, the WWW browser previously analyzes the XML document stored in the cache unit, and selects the elements which have been already obtained. The WWW browser transmits the selected obtained element parameter with the request for the XML document and the request for the style sheet to the WWW server. The WWW server selects newly required elements by analyzing the obtained element parameter and the style sheet, extracts the necessary elements from the XML document, and transmits the extracted necessary elements to the WWW browser. Consequently, the communication amount can be reduced.

Further, the amount of the memory required for receiving the XML document at the WWW browser side can be also reduced.

### Embodiment 7.

In the explanation of the fifth embodiment, the WWW server selects the necessary elements and extracts the elements. In the seventh embodiment, another case will be explained in which the proxy server selects the necessary elements and extracts the elements.

Fig. 21 shows a configuration of a structured document browsing system according to the seventh embodiment. The WWW server 1, the proxy server 4 and the WWW browser 3 are connected via the network 2.

The WWW server 1 includes the communicating unit 11 (not shown in the figure), the memory 12 and so on.

The WWW browser 3 includes the communicating unit 31, the style sheet processing unit 33, the display unit 32 and so on.

The proxy server 6 includes the communicating unit 61 for communicating with the WWW server 1 and the WWW browser 3, the necessary element selecting unit 64 for selecting the necessary elements for display from the style sheet, the element extracting unit 65 for extracting the elements from the XML document, the temporary memory (not shown in the figure) and so on.

An operation will be explained in the following. Fig. 22 shows the operation of a structured document browsing system according to the seventh embodiment.

The WWW browser 3 requests the XML document and the style sheet from the proxy server 6 (steps S7001, X7201).

The proxy server 6 requests the XML document from the WWW server 2 (steps S7202, S7102), and receives the requested XML document (steps S7203, S7103). The received XML document is stored in the temporary memory. Further, the style sheet is also requested from the WWW server 1 (steps S7204, S7104), and receives the requested style sheet (steps S7205, S7105). The received style sheet is also stored in the temporary memory.

Next, the proxy server 6 analyzes the received style sheet using the necessary element selecting unit 64 and selects the necessary elements for display (step S7206). For example, in case of the style sheet shown in Fig. 28, the elements required for display are the "name" elements of the "person" elements within the "addressbook" element, which can be represented by, for example, the parameter shown in Fig. 3 (necessary element parameter).

Subsequently, the proxy server 6 extracts only the elements specified by the necessary element parameter from the XML document received from the WWW server 1 (step S7207). Fig. 4 shows an example of the XML document extracted from the XML document shown in Fig. 27 based on the necessary element parameter shown in Fig. 3.

Then, the extracted XML document of necessary elements and the style sheet are transmitted to the WWW browser 3 (steps S7008, S7208).

Finally, the WWW browser 3 applies the style sheet to the XML document received from the WWW server using the style sheet processing unit 33, converts the document into the display format data (step S7009), and displays the display format data (step S7030).

According to the seventh embodiment, the WWW browser requests the XML document and the style sheet from the proxy server, and the proxy server receives the XML document and the style sheet from the WWW server. The proxy server selects the elements required for display by analyzing the style sheet and extracts the necessary elements from the XML document to transmit to the WWW browser. Consequently, the amount of the communication between the proxy server and the WWW browser can be reduced.

Further, it is also possible to reduce the amount of the memory required for receiving the XML document at the WWW browser side. The existing WWW server can be used without any modification, namely, there is no need to add a new function.

### Embodiment 8.

In the eighth embodiment, another case will be explained in which display format data is generated in the proxy server.

Fig. 23 shows a configuration of a structured document browsing system according to the eighth embodiment. In the figure, the WWW server 1, the proxy server 6 and the WWW browser 3 are connected via the network 2.

The WWW server 1 includes the communicating unit 11 (not shown in the figure), the memory 12 and so on.

The WWW browser 3 includes the communicating unit 31, the display unit 32 for displaying the document and so on.

The proxy server 4 includes the communicating unit 61 for communicating with the WWW server 1 and the WWW browser 3, the style sheet processing unit 63 for applying the style sheet to the XML document, the temporary memory (not shown in the figure) and so on.

An operation will be explained in the following. Fig. 24 shows the operation of the structured document browsing system according to the eighth embodiment.

First, the WWW browser 3 requests the XML document and the style sheet from the proxy server 6 (steps S8001, S8201).

Next, the proxy server 6 requests the XML document from the WWW server 1 (steps S8202, S8102), and receives the document (steps S8203, S8103). The received XML document is stored in the temporary memory. Further, the style sheet is also requested from the WWW server (steps S8204, S8104), and received (steps S8205, S8105). The received style sheet is also stored in the temporary memory.

Next, the proxy server 6 applies the style sheet to the XML document received from the WWW server 1 using the style sheet processing unit 63, converts the document into the display format data (step S8206), and transmits the document to which the style sheet has been applied and which has been also converted into the display format data is transmitted to the WWW browser 3 (steps S8007, S8207).

Finally, the WWW browser 3 displays the document to which the style sheet has been applied and which has been converted into the display format data (step S8008).

According to the eighth embodiment, the WWW browser requests the XML document and the style sheet from the proxy server, and the proxy server receives the XML document and the style sheet from the WWW server. The proxy server applies the style sheet to the XML document, converts the document into the document display format data (for example, HTML, PostScript), and transmits the document to the WWW browser. Then, the WWW browser displays the received XML document. Therefore, even the WWW browser disable to process the XML document and the style sheet directly can display the XML document.

Further, the existing WWW server can be used without any modification, and there is no need to add a new function.

Having thus described several particular embodiments of the present invention, various alterations, modifications, and improvements will readily occur to those skilled in the art. Such alterations, modifications, and improvements are intended to be part of this disclosure, and are intended to be within the spirit and scope of the invention. Accordingly, the foregoing description is by way of example only, and in not intended to be limiting. The present invention is limited only as defined in the following claims and the equivalents thereto.

## Claims

1. A structured document browsing system having a server (1) and a browser (3) which are mutually connected,
wherein the server comprises:
a structured document memory (4) for storing a structured document having a plurality of elements, and
wherein the browser comprises:
a necessary element selecting unit (34) for selecting necessary elements for displaying the structured document from a style sheet which is information identifying a format for displaying the structured document;
a necessary element parameter transmitting unit (31) for transmitting a necessary element parameter specifying the necessary elements selected; and
a structured document request transmitting unit (31) for transmitting a request for the structured document, and
wherein the server further comprises:
a structured document request receiving unit (11) for receiving the request for the structured document;
a necessary element parameter receiving unit (11) for receiving the necessary element parameter;
an element extracting unit (13) for reading the structured document requested from the structured document memory, for extracting elements specified by the necessary element parameter received from the structured document read, and for generating an extracted structured document of necessary elements consisting of the elements extracted; and
an extracted structured document of necessary elements transmitting unit (11) for transmitting the extracted structured document of necessary elements generated, and
wherein the browser further comprises:
an extracted structured document of necessary elements receiving unit (31) for receiving the extracted structured document of necessary elements;
a style sheet applying unit (33) for applying the style sheet to the extracted structured document of necessary elements received, and for generating a display format data; and
a display unit (32) for displaying the display format data generated.

2. The structured document browsing system according to claim 1,
wherein the browser further comprises an extracted structured document of necessary elements memory (35) for storing the extracted structured document of necessary elements received from the extracted structured document of necessary elements receiving unit, and
wherein the necessary element selecting unit selects the necessary elements for displaying the structured document based on the extracted structured document of necessary elements stored and the style sheet.

3. The structured document browsing system according to claim 1,
wherein the server is connected with another server as a proxy server (6), and comprises:
a structured document request transmitting unit at a server side (61) for transmitting the request for the structured document to the other server when the request for the structured document is received; and
a structured document receiving unit at the server side (61) for receiving the structured document from the other server, and
wherein the structured document memory stores the structured document received.

4. A structured document browsing system having a server (1) and a browser (3) which are mutually connected,
wherein the server comprises:
a structured document memory (4) for storing a structured document having a plurality of elements;
a style sheet memory (5) for storing a style sheet which is information indicating a format for displaying the structured document, and
wherein the browser comprises:
a structured document request transmitting unit (31) for transmitting a request for the structured document; and
a style sheet request transmitting unit (31) for transmitting a request for the style sheet,
wherein the server further comprises:
a structured document request receiving unit (11) for receiving the request for the structured document;
a style sheet request receiving unit (11) for receiving the request for the style sheet;
a necessary element selecting unit (14) for reading the style sheet requested from the style sheet memory, and selecting necessary elements for displaying the structured document;
an element extracting unit (13) for reading the structured document requested from the structured document memory, extracting the elements selected from the structured document read, and generating an extracted structured document of necessary elements consisting of the elements extracted;
an extracted structured document of necessary elements transmitting unit (11) for transmitting the extracted structured document of necessary elements generated; and
a style sheet transmitting unit (11) for transmitting the style sheet, and
wherein the browser further comprises:
an extracted structured document of necessary elements receiving unit (31) for receiving the extracted structured document of necessary elements;
a style sheet receiving unit (31) for receiving the style sheet;
a style sheet applying unit (33) for applying the style sheet received to the extracted structured document of necessary elements received, and for generating a display format data; and
a display unit (32) for displaying the display format data generated.

5. The structured document browsing system according to claim 4,
wherein the browser further comprises:
an extracted structured document of necessary elements memory (35) for storing the extracted structured document of necessary elements received from the extracted structured document of necessary elements receiving unit;
an obtained element selecting unit (30) for selecting an obtained element from the extracted structured document of necessary elements stored;
an obtained element parameter transmitting unit (31) for transmitting an obtained element parameter showing the obtained element selected, and
wherein the server further comprises an obtained element parameter receiving unit (11) for receiving the obtained element parameter; and
wherein the necessary element selecting unit selects the necessary elements for displaying the structured document based on the style sheet read from the style sheet memory and the obtained element parameter received.

6. The structured document browsing system according to claim 4,
wherein the server is connected to another server as a proxy server (6), and
wherein the server further comprises:
a structured document request transmitting unit at a server side (61) for transmitting the request for the structured document to the other server when the request for the structured document is received; and
a structured document receiving unit at the server side (61) for receiving the structured document from the other server, and
wherein the structured document memory stores the structured document received;
wherein the server further comprises:
a style sheet request transmitting unit at the server side (61) for transmitting the request for the style sheet to the other server when the request for the style sheet is received; and
a style sheet receiving unit at the server side (61) for receiving the style sheet from the other server, and
wherein the style sheet memory stores the style sheet received.

7. A structured document browsing system having a server (1), a proxy server (6) and a browser (3),
wherein the server comprises:
a structured document memory at a server side (4) for storing a structured document having a plurality of elements; and
a style sheet memory at the server side (5) for storing a style sheet which is information identifying a format for displaying the structured document, and
wherein the browser comprises:
a structured document request transmitting unit at a browser side (31) for transmitting a request for the structured document to the proxy server; and
a style sheet request transmitting unit at the browser side (31) for transmitting a request for the style sheet to the proxy server, and
wherein the proxy server comprises:
a structured document request receiving unit at a proxy server side (61) for receiving the request for the structured document from the browser;
a structured document request transmitting unit at the proxy server side (61) for transmitting the request for the structured document to the server when the request for the structured document is received;
a style sheet request receiving unit at the proxy server side (61) for receiving the request for the style sheet from the browser; and
a style sheet request transmitting unit at the proxy server side (61) for transmitting the request for the style sheet to the server when the request for the style sheet is received, and
wherein the server further comprises:
a structured document request receiving unit at the server side (11) for receiving the request for the structured document from the proxy server;
a structured document transmitting unit at the server side (11) for reading the structured document requested from the structured document memory, and for transmitting the structured document read to the proxy server when the request for the structured document is received;
a style sheet request receiving unit at the server side (11) for receiving the request for the style sheet from the proxy server; and
a style sheet transmitting unit at the server side (11) for reading the style sheet requested from the style sheet memory at the server side, and for transmitting the style sheet read to the proxy server when the request for the style sheet is received, and
wherein the proxy server further comprises:
a structured document receiving unit at the proxy server side (61) for receiving the structured document from the server;
a structured document memory at the proxy server side for storing the structured document received;
a style sheet receiving unit at the proxy server side (61) for receiving the style sheet from the server;
a style sheet memory at the proxy server side for storing the style sheet received;
a style sheet applying unit (63) for applying the style sheet stored in the style sheet memory at the proxy server side to the structured document stored in the structured document memory at the proxy server side, and for generating a display format data; and
a display format data transmitting unit (61) for transmitting the display format data generated to the browser, and
wherein the browser further comprises:
a display format data receiving unit (31) for receiving the display format data from the proxy server; and
a display unit (32) for displaying the display format data received.

8. A method for browsing a structured document of a structured document browsing system having a server which stores a structured document including a plurality of elements and a browser connected with the server, the method comprising:
selecting necessary elements for displaying the structured document from a style sheet which is information identifying a format for displaying the structured document by the browser;
transmitting a necessary element parameter showing the necessary elements selected, by the browser;
transmitting a request for the structured document by the browser;
receiving the request for the structured document by the server; receiving the necessary element parameter by the server;
reading the structured document requested, extracting elements specified by the necessary element parameter received, and generating an extracted structured document of necessary elements consisting of the elements extracted, by the server;
transmitting the extracted structured document of necessary elements generated, by the server;
receiving the extracted structured document of necessary elements by the browser;
applying the style sheet to the extracted structured document of necessary elements received, and generating a display format data by the browser; and
displaying the display format data generated by the browser.

9. A server connected with a browser, the server comprising:
a structured document memory for storing a structured document having a plurality of elements;
a structured document request receiving unit for receiving a request for the structured document from the browser;
a necessary element parameter receiving unit for receiving a necessary element parameter showing necessary elements for displaying the structured document from the browser;
an element extracting unit for reading the structured document requested from the structured document memory, for extracting elements specified by the necessary element parameter received from the structured document read, and for generating an extracted structured document of necessary elements consisting of the elements extracted; and
an extracted structured document of necessary elements transmitting unit for transmitting the extracted structured document of necessary elements generated to the browser.

10. A browser connected with a server which stores a structured document having a plurality of elements, the browser comprising:
a necessary element selecting unit for selecting necessary elements for displaying the structured document from a style sheet which is information identifying a format for displaying the structured document;
a necessary element parameter transmitting unit for transmitting a necessary element parameter showing the necessary elements selected;
a structured document request transmitting unit for transmitting a request for the structured document to the server;
an extracted structured document of necessary elements receiving unit for receiving an extracted structured document of necessary elements consisting of elements specified by the necessary element parameter from the server;
a style sheet applying unit for applying the style sheet to the extracted structured document of necessary elements received and for generating a display format data; and
a display unit for displaying the display format data generated.

11. A computer program comprising program code means for causing a computer which is a server for storing a structured document having a plurality of elements and connected with a browser to perform an operation process,
wherein the operation process comprises:
receiving a request for the structured document from the browser;
receiving a necessary element parameter showing necessary elements for displaying the structured document from the browser;
reading the structured document requested, extracting elements specified by the necessary element parameter received, and generating an extracted structured document of necessary elements consisting of the elements extracted; and transmitting the extracted structured document of necessary elements generated to the browser.

12. A computer program comprising program code means for causing a computer which is a browser connected with a server for storing a structured document having a plurality of elements to perform an operation process,
wherein the operation process comprises:
selecting necessary elements for displaying the structured document from a style sheet which is information identifying a format for displaying the structured document;
transmitting a necessary element parameter showing the necessary elements selected;
transmitting a request for the structured document to the server;
receiving an extracted structured document of necessary elements consisting of elements specified by the necessary element parameter from the server;
applying the style sheet to the extracted structured document of necessary elements received, and generating a display format data; and displaying the display format data generated.

13. A method for browsing a structured document of a structured document browsing system having a server which stores a structured document including a plurality of elements and a style sheet being information identifying a format for displaying the structured document, and a browser connected with the server, the method comprising:
transmitting a request for the structured document by the browser;
transmitting a request for the style sheet by the browser;
receiving the request for the structured document by the server;
receiving the request for the style sheet by the server;
reading the style sheet requested, and selecting necessary elements for displaying the structured document from the style sheet read, by the server;
reading the structured document requested, extracting the necessary elements selected from the structured document read, and generating an extracted structured document of necessary elements consisting of the elements extracted by the server;
transmitting the extracted structured document of necessary elements generated, by the server;
transmitting the style sheet by the server;
receiving the extracted structured document of necessary elements by the browser;
receiving the style sheet by the browser;
applying the style sheet received to the extracted structured document of necessary elements received, and generating a display format data, by the browser; and
displaying the display format data generated, by the browser.

14. A server connected with a browser comprising:
a structured document memory for storing a structured document having a plurality of elements;
a style sheet memory for storing a style sheet which is information identifying a format for displaying the structured document;
a structured document request receiving unit for receiving a request for the structured document from the browser;
a style sheet request receiving unit for receiving a request for the style sheet from the browser;
a necessary element selecting unit for reading the style sheet requested from the style sheet memory, and selecting necessary elements for displaying the structured document from the style sheet read;
an element extracting unit for reading the structured document requested from the structured document memory, extracting the necessary elements selected from the structured document read, and generating an extracted structured document of necessary elements consisting of the elements extracted;
an extracted structured document of necessary elements transmitting unit for transmitting the extracted structured document of necessary elements generated to the browser; and
a style sheet transmitting unit for transmitting the style sheet to the browser.

15. A browser connected with a server which stores a structured document having a plurality of elements and a style sheet being information identifying a format for displaying the structured document, the browser comprising:
a structured document request transmitting unit for transmitting a request for the structured document to the server;
a style sheet request transmitting unit for transmitting a request for the style sheet to the server;
an extracted structured document of necessary elements receiving unit for receiving an extracted structured document of necessary elements consisting of necessary elements for displaying the structured document from the server;
a style sheet receiving unit for receiving the style sheet from the server;
a style sheet applying unit for applying the style sheet received to the extracted structured document of necessary elements received, and for generating a display format data; and
a display unit for displaying the display format data.

16. A computer program comprising program code means for causing a computer which is a server for storing a structured document having a plurality of elements and a style sheet for identifying a format for displaying the structured document and connected with a browser to perform an operation process, wherein the operation process comprises:
receiving a request for the structured document from the browser;
receiving a request for the style sheet from the browser;
reading the style sheet requested, and selecting necessary elements for displaying the structured document from the style sheet read;
reading the structured document requested, extracting the necessary elements selected from the structured document read, and generating an extracted structured document of necessary elements consisting of the elements extracted;
transmitting the extracted structured document of necessary elements generated to the browser; and
transmitting the style sheet to the browser.

17. A computer program comprising program code means for causing a computer which is a browser connected with a server for storing a structured document having a plurality of elements and a style sheet being information for identifying a format for displaying the structured document to perform an operation process, wherein the operation process comprises:
transmitting a request for the structured document to the server;
transmitting a request for the style sheet to the server;
receiving an extracted structured document of necessary elements consisting of necessary elements for displaying the structured document from the server;
receiving the style sheet from the server;
applying the style sheet received to the extracted structured document of necessary elements received, and generating a display format data; and
displaying the display format data.

18. A method for browsing a structured document of a structured document browsing system having a server for storing the structured document including a plurality of elements and a style sheet being information identifying a format for displaying the structured document, a proxy server connected with the server, and a browser connected with the proxy server, the method comprising:
transmitting a request for the structured document to the proxy server by the browser;
transmitting a request for the style sheet to the proxy server by the browser;
receiving the request for the structured document from the browser by the proxy server;
transmitting the request for the structured document to the server by the proxy server when the request for the structured document is received;
receiving the request for the style sheet from the browser by the proxy server;
transmitting the request for the style sheet to the server by the proxy server when the request for the style sheet is received;
receiving the request for the structured document from the proxy server by the server;
reading the structured document requested, and transmitting the structured document read to the proxy server by the server when the request for the structured document is received;
receiving the request for the style sheet from the proxy server by the server;
reading the style sheet requested, and transmitting the style sheet read to the proxy server by the server when the request for the style sheet is received;
receiving the structured document from the server by the proxy server;
storing the structured document received, by the proxy server; receiving the style sheet from the server by the proxy server;
storing the style sheet received, by the proxy server;
applying the style sheet stored to the structured document stored, and generating a display format data by the proxy server;
transmitting the display format data to the browser by the proxy server;
receiving the display format data from the proxy server by the browser; and
displaying the display format data received, by the browser.

19. A proxy server connected with a server which stores a structured document having a plurality of elements and a style sheet being information for identifying a format for displaying the structured document, and a browser, the proxy server comprising:
a structured document request receiving unit at a proxy server side for receiving a request for the structured document from the browser;
a structured document request transmitting unit at the proxy server side for transmitting the request for the structured document to the server when the request for the structured document is received;
a style sheet request receiving unit at the proxy server side for receiving a request for the style sheet from the browser;
a style sheet request transmitting unit at the proxy server side for transmitting the request for the style sheet to the server when the request for the style sheet is received;
a structured document receiving unit at the proxy server side for receiving the structured document from the server;
a structured document memory at the proxy server side for storing the structured document received;
a style sheet receiving unit at the proxy server side for receiving the style sheet from the server;
a style sheet memory at the proxy server side for storing the style sheet received;
a style sheet applying unit for applying the style sheet stored in the style sheet memory at the proxy server side to the structured document stored in the structured document memory at the proxy server side, and for generating a display format data; and
a display format data transmitting unit for transmitting the display format data generated to the browser.

20. A computer program comprising program code means for causing a computer which is a proxy server connected with a server storing a structured document having a plurality of elements and a style sheet being information identifying a format for displaying the structured document, and a browser to perform an operation process, wherein the operation process comprises:
receiving a request for the structured document from the browser;
transmitting the request for the structured document to the server when the request for the structured document is received;
receiving a request for the style sheet from the browser;
transmitting the request for the style sheet to the server when the request for the style sheet is received;
receiving the structured document from the server;
storing the structured document received;
receiving the style sheet from the server;
storing the style sheet received;
applying the style sheet stored to the structured document stored, and generating a display format data; and
transmitting the display format data to the browser.

21. A computer readable storage medium having stored thereon a computer program in accordance with claim 11, 12, 16, 17 or 20.
